# EUROPÄISCHE PATENTANMELDUNG

(11) **EP 4 523 537 A1**
(43) Veröffentlichungstag der Anmeldung: **19.03.2025**
(21) Anmeldenummer: 23197204.3
(22) Anmeldetag: 13.09.2023
(51) Int. Cl.: A22C 11/02

(54) **FÜLLMASCHINE UND VERFAHREN ZUM RADIALEN AUSRICHTEN EINER TÜLLE**

(71) Anmelder: Albert Handtmann Maschinenfabrik GmbH & Co. KG, 88400 Biberach (DE)
(72) Erfinder: Eble, Luis, 88284 Wolpertswende (DE); Nusser, Marcel, 88471 Laupheim (DE); Schliesser, Gerhard, 88489 Wain (DE)
(74) Vertreter: Grünecker Patent- und Rechtsanwälte PartG mbB

(57) **Zusammenfassung**

Die Erfindung betrifft eine Füllmaschine und ein Verfahren zum Abfüllen von Lebensmitteln, insbesondere zur Wurstherstellung, mit einer Tülle zum Ausstoßen des Lebensmittels und mit einer Lagereinrichtung zum Lagern, insbesondere drehbaren Lagern der Tülle um eine Längsachse L. Die Vorrichtung zum radialen Ausrichten der verbogenen Tülle weist ein bewegliches Biegeelement auf, das die Tülle zumindest abschnittsweise verbiegen und ausrichten kann.

## Beschreibung

Die Erfindung betrifft eine Füllmaschine zum Abfüllen von Lebensmitteln, sowie ein Verfahren zum radialen Ausrichten einer Tülle gemäß den Oberbegriffen der Ansprüche 1 und 12.

Füllmaschinen zum Abfüllen von Lebensmitteln weisen Füllrohre zum Ausstoßen des Lebensmittels auf. Bei der industriellen Lebensmittelverarbeitung, insbesondere bei der Produktion von Würstchen, werden häufig automatische Füllmaschinen eingesetzt, die von einer Bedienperson betrieben werden. Bei diesen automatischen Füllmaschinen kommt es vor, dass die Tüllen, z.B. feststehende Füllrohre oder angetriebene Abdrehtüllen die zur Aufnahme der Wursthülle und zum Ausstoßen von pastöser Masse in die Wursthülle dienen, durch den Gebrauch nicht vollständig gerade, sondern verbogen sind. Die Tüllen sind beispielsweise 500 mm lange Rohrleitungen mit einem Durchmesserbereich von 8 bis 28 mm und Wandstärken im Bereich von 0,35 bis 1,5 mm. Das Verbiegen der Tüllen geschieht z.B. durch den unsachgemäßen Transport, die unsachgemäße Reinigung, die unsachgemäße Lagerung und die fehlerhafte Nutzung eines Darmaufziehgerätes.

Die Tüllen müssen deshalb so lang sein, da mit zunehmender Länge mehr geraffte Wursthülle aufgezogen werden kann, so dass es weniger Produktionsunterbrechungen, d.h. Darmwechsel, geben muss.

In der Praxis führen verbogene Tüllen zu folgenden Problemen:
1. Beim Aufziehen einer neuen Darmraupe kann diese beschädigt werden. Beim Einfahren der Tülle in die Darmbremse nach dem Aufziehen einer neuen Wursthülle kann es zu erheblichen Beschädigungen kommen, wenn die Tülle nicht in die Darmbremse eintaucht, sondern z.B. mit der Einstellschraube kollidiert.
2. Beim Eintauchen der Tülle in die Darmbremse kann die Wursthülle, die Tülle oder die Darmbremse beschädigt werden.
3. Bei der Produktion kann es zu Darmplatzern kommen. Die verbogenen Tüllen führen in der Praxis zur Zunahme von Produktionsfehlern, d.h. Darmplatzern. Dies ist der Fall, da die Vorspannung über die Darmbremse durch die Verbiegung ungleichmäßig an der Tülle wirkt. Außerdem kann es in einzelnen Fällen zum Eindringen von Fremdluft kommen, was durch die verbogenen Tüllen begünstigt wird.
4. Verbogene Tüllen können auch sicherheitstechnisch kritisch werden, sofern diese eine bestimmte Biegung überschreiten. Diese werden bei hohen Drehzahlen stark ausgelenkt oder geknickt und können zu Beschädigungen führen oder für den Bediener eine Gefahr darstellen.
5. Aber auch bei feststehenden, d.h. nicht drehbar gelagerten Tüllen bzw. Füllrohren kann es durch Verbiegen zu dem Problem kommen, dass die Tülle dann zur nachfolgenden Einheit, z.B. einen Clipper nicht korrekt ausgerichtet ist.

Im Stand der Technik wurde versucht, die Tüllen manuell wiederauszurichten. Das Ergebnis ist aber nicht zufriedenstellend und darüber hinaus auch nicht reproduzierbar und hängt stark vom Geschick und dem Qualitätsanspruch des Bedieners ab. Je kleiner der Durchmesser der Tülle ist, desto mehr Auslenkung ist erforderlich und desto schwieriger ist es, diese prozesssicher auszurichten. Je größer der Durchmesser der Abdrehtülle, desto mehr Kraft durch den Bediener ist erforderlich.

Zum Aufziehen einer neuen Wursthülle wurden bereits Tüllenzentriereinrichtungen vorgeschlagen, damit die Wursthülle ohne Beschädigung auf die Tülle aufgeschoben werden kann (vgl. beispielsweise EP 2 745 698). Allerdings wirkt diese Zentrierung nur temporär beim Aufziehen der Wursthülle, so dass es keine dauerhafte Richtfunktion nach dem Lösen der Zentriereinrichtung gibt. Das bedeutet allerdings, dass, selbst wenn die Tülle beim Darmaufziehen zentriert wurde, die Probleme beim Eintauchen in die Darmbremseweiterbestehen. Hier ist kein Zentrieren mittels mechanischer Zwangsführung mehr möglich, da der Darm bereits aufgezogen ist und zwischen Tülle und möglicher Zentrierung angeordnet ist.

Hiervon ausgehend liegt der vorliegenden Erfindung die Aufgabe zugrunde, eine verbesserte Füllmaschine sowie ein verbessertes Verfahren bereitzustellen, die die vorab beschriebenen Probleme mit verbogenen Tüllen verhindern.

Erfindungsgemäß wird diese Aufgabe durch die Merkmale der Ansprüche 1 und 12 gelöst.

Gemäß der vorliegenden Erfindung weist eine Füllmaschine zum Abfüllen von Lebensmitteln, insbesondere zur Wurstherstellung, eine Tülle zum Ausstoßen des Lebensmittels auf. Eine entsprechende Tülle, z.B. eine Abdrehtülle dient zum Ausstoßen des Lebensmittels beispielsweise in eine auf der Tülle geraffte Wursthülle. Unter den Ausdruck Tülle fällt auch ein feststehendes Füllrohr. Die Füllmaschine weist auch eine Lagereinrichtung auf, zum Lagern, insbesondere zum drehbaren Lagern der Tülle um eine Längsachse L.

Erfindungsgemäß weist die Füllmaschine eine Vorrichtung zum radialen Ausrichten einer verbogenen Tülle in Bezug zur Längsachse auf. Wenn die Tülle verbogen ist, liegt die Mittelachse nicht mehr auf einer Geraden, so dass es zu einer Rundlaufabweichung kommt, wenn beispielsweise die Tülle zum Abdrehen der einzelnen Wurstportionen um ihre Mittelachse gedreht wird. Die Vorrichtung zum radialen Ausrichten der verbogenen Tülle weist ein bewegliches Biegeelement auf, das die Tülle zumindest abschnittsweise verbiegen und wieder ausrichten kann, derart, dass die Mittelachse M der Tülle sich dann im Wesentlichen entlang der Längsachse L erstrecken kann.

Dadurch kann die Tülle, auf der beispielsweise bereits die Wursthülle gerafft ist, in die Darmbremse eintauchen, ohne dass die Tülle oder die Darmbremse oder aber die Wursthülle beschädigt wird. Somit kann wirksam Darmplatzern und weiteren Prozessfehlern vorgebeugt werden. Durch die korrekte Ausrichtung kann auch die Vorspannung über die Darmbremse gleichmäßig auf die Tülle wirken. Auch das Eindringen von Fremdluft kann verhindert werden. Somit kann die Füllmaschine auch bei hohen Drehzahlen sicher betrieben werden, da es zu keiner starken Auslenkung bzw. zu keiner Gefahr für den Bediener kommt.

Der Vorteil ergibt sich auch bereits beim Aufziehen der Wursthülle auf die Tülle, da diese dann genau zentriert werden kann und die Wursthülle ohne Beschädigung aufgezogen werden kann. Dadurch, dass das Biegeelement in die Füllmaschine integriert ist, wird ein einfacher Prozess für das Bedienpersonal mit verkürzter Anlernzeit ermöglicht. Auch ein automatisches Richten ist möglich, insbesondere bei Produktwechsel und folglich bei Austausch der Tüllen. Insgesamt ergibt sich eine reproduzierbare Produktqualität und eine höhere Linienauslastung durch weniger Produktionsunterbrechungen. Darüber hinaus ergibt sich eine Zeitersparnis insbesondere bei Revolvermaschinen, bei denen mehrere Tüllen abwechselnd zum Einsatz kommen.

Gemäß einer bevorzugten Ausführungsform ist das Biegeelement unter einem Winkel, insbesondere senkrecht zur Längsachse, beweglich, um so die Tülle zumindest abschnittsweise zu verbiegen. Vorteilhafterweise ist das Biegeelement senkrecht zur Längsachse beweglich. Die Tülle kann durch das Biegeelement, insbesondere den Biegestempel, entgegen der Krümmung gebogen werden. "Unter einem Winkel" bedeutet insbesondere unter einem Winkel von 90° ± 5° zur Längsachse L. Somit kann das Biegeelement die Tülle entgegen der Krümmung biegen. Durch die Auslenkung der Tülle kann sich der wirksame Winkel zwischen dem Biegeelement und der Mittelachse M dynamisch verändern.

Gemäß einem bevorzugten Ausführungsbeispiel ist das Biegeelement als Biegestößel ausgebildet z.B. in Form eines Druckzylinders. Das Biegeelement kann elektrisch, hydraulisch, pneumatisch oder mechanisch angetrieben sein.

Gemäß einem Ausführungsbeispiel weist der Biegestößel vorzugsweise an seinem der Tülle zugewandten Endbereich eine Aussparung auf, insbesondere eine im Wesentlichen V-förmige, U-förmige oder C-förmige Aussparung derart, dass beim Verbiegen die Tülle in der Aussparung liegt sowie zentriert und geführt wird. Durch die besondere Ausgestaltung des Endbereichs ist es möglich, dass beim Biegevorgang die Tülle sicher im Bereich der Aussparung anliegen kann und beispielsweise nicht ausweicht.

Gemäß einem bevorzugten Ausführungsbeispiel kann die Tülle derart verbogen werden, dass zumindest in dem, der Lagereinrichtung abgewandten Endbereich der Tülle, die Mittelachse der Tülle sich entlang der Längsachse erstreckt. Wenn zumindest im Endbereich, z.B. in den letzten 3 cm oder 4 cm der Tülle, die Tülle ordnungsgemäß ausgerichtet ist, kann die Tülle in die Darmbremse einfädeln, ohne dass es zu Beschädigungen kommt. Unter dem Merkmal, dass die Mittelachse M der Tülle sich im Wesentlichen entlang der Längsachse erstreckt, versteht man, dass die Mittelachse entweder mit der Längsachse zusammenfällt oder es nur geringe Abweichungen der Achsen von 0 mm bis- 3 mm gibt, bzw. dass im Endbereich die Rundlaufabweichung im Toleranzbereich a ≤ 0,5 mm, vorzugsweise im Bereich von a ≤ 0,3 mm ist.

Wenn gemäß der vorliegenden Erfindung die Füllmaschine eine Darmbremse aufweist, in der die Tülle in einer Füllposition gehalten ist, kann sich dann die Längsachse L zwischen der Lagereinrichtung und der Darmbremse erstrecken, wobei zumindest in dem der Lagereinrichtung abgewandten Endbereich der Tülle die Mittelachse M des Füllrohrs sich entlang der Längsachse L erstreckt.

Gemäß einem bevorzugten Ausführungsbeispiel kann das Biegeelement entlang einer zur Längsachse L parallelen oder schrägen Achse hin und her beweglich angeordnet sein, d.h. entweder manuell oder über einen entsprechenden Antrieb, z.B. einen Motor. Somit kann die Tülle gezielt an bestimmten Stellen der Längsachse gebogen werden. Soll das Füllrohr kontinuierlich entlang der Längsachse korrigiert werden, so ist dies über einen entsprechenden Antrieb in Richtung der Längsachse möglich. Zudem ist das Biegeelement in der Lage, sich in eine Ruhelage zurückzuziehen, in der der Regelbetrieb nicht gestört wird. Dies kann beispielsweise durch einen Hub ( um z.B. weitere ca. 50 mm ) radial zur Tülle realisiert werden.

Gemäß einer weiteren Ausführungsform kann die Vorrichtung zum radialen Ausrichten der verbogenen Tülle einen Sensor aufweisen, der insbesondere die Rundlaufabweichung messen kann.

Der Sensor kann dabei ein Sensor zum Messen der Position der Tüllenaußenwand sein, insbesondere ein Abstandsmesser und/oder zum Messen des Tüllendurchmessers (z. B. durch ein Lichtband) ausgebildet sein. Für den gemessenem Tüllendurchmesser kann die Sollposition der Tüllenwand bestimmt werden. Der Nominalwert für den Tüllendurchmesser kann aber auch über die Maschinensteuerung eingegeben werden. Durch Eingabe des tatsächlichen Wertes des Tüllendurchmessers kann dieser z.B. wieder verglichen werden mit der gemessenen Position der Tüllenaußenwand, um so wieder Rundlaufabweichungen festzustellen.

Der Durchmesser der Tülle, sowie der Grad der Auslenkung bzw. die Rundlaufabweichung kann auch durch die rotationsabhängige Kraftaufnahme des Biegeelement erfasst und rechnerisch durch die Maschinensteuerung ermittelt werden, sofern diese messtechnisch dafür vorbereitet wird (z. B. Kraftaufnehmer, Dehnmessstreifen oder Messung des Antriebsstromes bei einem elektrischen Motor).

Vorteilhafterweise ist der Sensor entlang einer zur Längsachse L parallelen oder schrägen Achse hin und her beweglich angeordnet, so dass eine Messung in Richtung der Längsachse L möglich ist. Vorteilhafterweise ist der Sensor zusammen mit dem Biegeelement hin und her bewegbar, so dass in Abhängigkeit des Messwerts das Biegeelement angesteuert werden kann, wenn z.B. der Sensor vorauseilt. Dabei kann an mehreren in Längsrichtung verteilten Punkten gemessen und dann jeweils gebogen werden oder aber Sensor und Biegeelement bewegen sich kontinuierlich in Längsrichtung und messen kontinuierlich z.B. die Rundlaufabweichung, wobei das Biegeelement entsprechend in eine Richtung quer zur Längsachse L bewegt wird und einen entsprechenden Druck ausübt, um die Tülle zu richten.

Gemäß einer Ausführungsform kann die Tülle über einen Servoantrieb mit Lageerkennung der Winkelstellung gedreht werden. Somit kann der Sensor gezielt Abweichungen in Abhängigkeit der Winkelstellung der Tülle erkennen und auch das Biegeelement gezielt die Abweichung aus der richtigen Richtung kompensieren.

Vorteilhafterweise weist die Füllmaschine eine Steuerung auf, die in Abhängigkeit eines Sensorsignals die Bewegung des Biegeelements zur Längsachse bestimmt und einen Antrieb des Biegeelements entsprechend ansteuert, insbesondere Weg-gesteuert und/oder Kraft-gesteuert und optional die Bewegung des Biegeelements in Richtung der Längsachse bestimmt und einen entsprechenden Antrieb des Biegeelements für diese Bewegung ansteuert.

Es kann eine Ausrichtung von der Einspannstelle, d.h. von der Lagereinrichtung zum offenen Ende der Tülle hin erfolgen. Die Tülle kann je nach Anzahl der gemessenen und von der Mittelachse abweichenden Punkte nahezu beliebig genau ausgerichtet werden. Je größer die Anzahl der eingestellten Punkte und je enger die Toleranz gewählt wird, desto genauer, aber zeitaufwendiger, ist das Verfahren. Die Bewegung senkrecht oder unter einem Winkel zur Längsachse erfolgt in Abhängigkeit der gemessenen Abweichung an dieser Position. Der Antrieb des Biegeelements für eine Bewegung zur Längsachse kann beispielsweise durch einen elektrischen, hydraulischen, pneumatischen oder mechanischen Antrieb realisiert werden, z.B. durch einen Pneumatikzylinder. Die Bewegung in Richtung der Längsachse kann realisiert werden durch ein Antriebssystem z. B. umfassend einen Motor, insbesondere einen Schrittmotor oder Servomotor und/oder ein Getriebe mit einem Schlitten an einer Zahnriemenachse.

Es ist aber auch möglich, dass gemäß einem weiteren Ausführungsbeispiel zum radialen Ausrichten einer verbogenen Tülle die Vorrichtung einen Hebel aufweist, der insbesondere über Handkraft das Biegeelement, insbesondere den Biegestößel, bewegt, wobei vorzugsweise ein Anschlag für den Hebel vorgesehen ist und noch bevorzugter verschiedene Anschlagpositionen einstellbar sind. Eine solche Lösung ist kostengünstig und einfach zu realisieren und kann auch an bestehenden Maschinen nachgerüstet werden. Der Hebel ermöglicht für den Bediener ein sicheres Verfahren, da er keine drehenden Teile von Hand berühren muss. Durch das Implementieren eines Anschlags für den Hebel ist das Ergebnis reproduzierbar. Für verschiedene Tüllen können verschiedene Anschlagpositionen gewählt werden. Der Hebel und das Biegeelement können stationär oder auf einer Achse parallel zur Längsachse hin und her verfahrbar sein. Zudem kann gegenüberliegend zum Biegeelement eine Gegenhalteeinrichtung platziert werden.

Die Vorrichtung zum radialen Ausrichten, insbesondere der Hebel kann zumindest temporär an der Füllmaschine befestigt sein, d.h. es besteht die Möglichkeit nach dem Ausrichten die Vorrichtung zum radialen Ausrichten abzumontieren oder nachzurüsten.

Gemäß einem weiteren Ausführungsbeispiel kann die Vorrichtung zum radialen Ausrichten einer verbogenen Tülle eine Walzricht-Einrichtung aufweisen mit mehreren, in Längsrichtung der Tülle betrachtet, hintereinander und um den Tüllenumfang herum angeordneten Biegeelementen in Form von vorgespannten Rollen, die die Tülle wechselseitig biegen und begradigen können, wobei vorzugsweise die Walzricht-Einrichtung parallel zur Längsrichtung L hin und her bewegbar ist. Die Walzricht-Einrichtung kann dann beispielsweise von Hand oder automatisch an der Tülle entlang verfahren werden. Damit ist die korrekte Ausrichtung der Achse sichergestellt.

Gemäß dem erfindungsgemäßen Verfahren zum radialen Ausrichten einer Tülle, insbesondere mit einer Füllmaschine, nach mindestens einem der Ansprüche 1 bis 11 wird eine verbogene Tülle in einer Lagereinrichtung zum Lagern, insbesondere zum drehbaren Lagern der Tülle um eine Längsachse L eingespannt, wobei ein Biegeelement sich vorzugsweise unter einem Winkel, insbesondere senkrecht zur Längsachse L, bewegt und die Tülle zum radialen Ausrichten der verbogenen Tülle zumindest abschnittsweise verbogen wird.

Das heißt, dass z.B. in Abhängigkeit einer Abweichung der Tüllenmittelachse M zu einer Längsachse L oder bei einer Abweichung der Position der Tüllenaußenwand von einer entsprechenden Sollposition ein Biegeelement die Tülle verbiegt, um diese Abweichung zu kompensieren.

Vorteilhafterweise kann ein Sensor insbesondere die Rundlaufabweichung messen, vorzugsweise die Position der Tüllenaußenwand an mehreren Stellen entlang der Tülle (an mehreren Punkten oder kontinuierlich über die Länge) und zwar insbesondere in Abhängigkeit des Drehwinkels der Tülle, d.h. bei einem bestimmten Drehwinkel wenn die Tülle beim Richten nicht gedreht wird.

Gemäß einem bevorzugten Ausführungsbeispiel dreht sich die Tülle während des Ausrichtens mittels des Biegeelements, wobei sich das Biegeelement, insbesondere vom Lagerelement, d.h z.B. von der Einklemmstelle bis zu dem der Lagereinrichtung abgewandten Füllrohrspitze bewegt und dann vorzugsweise langsam zurück, insbesondere in den mittleren Bereich zurückverfahren wird oder
die Tülle steht, wobei die Tülle vorzugsweise von einem Gegenhalter gestützt wird und das Biegeelement an einer oder mehreren Positionen (auch kontinuierlich) der Tülle Kraft- oder Weg-gesteuert auf die Tülle drückt.

Gemäß einer bevorzugten Ausführungsform wird nur der der Lagereinrichtung abgewandte Endbereich der Tülle, z.B. die letzten 3 cm bis 4 cm durch das Biegeelement ausgelenkt und gerichtet. Wenn in diesem Bereich die Mittelachse M der Tülle im Wesentlichen mit der Längsachse L zusammenfällt, kann die Tülle sicher in die Darmbremse eingefahren werden.

Die verbogene Tülle wird dabei ausgerichtet, bevor eine Wursthülle aufgezogen wird. Wird die Tülle bereits vor dem Aufziehen der Wursthülle ausgerichtet, ergibt sich der Vorteil, dass auch die Verletzungsgefahr der Wursthülle beim Aufziehen minimiert werden kann, da die Tülle exakt zur Wursthülle zentriert werden kann.

Gemäß einer Ausführungsform kann das Biegeelement eine Drehbewegung durchführen und ein Revolver sein, in dem die Lagereinrichtung angeordnet ist, wobei der Revolver um eine Achse parallel zur Längsachse L gedreht werden kann und durch diese Drehbewegung die in einer Einspanneinrichtung zentrisch eingespannte Tülle bewegen kann. Somit kann zum Verbiegen der Tülle der Revolver verwendet werden, der ohnehin bereits vorhanden ist um mehrere Füllrohre drehbar zu lagern und durch Drehen in eine Füllposition zum Einfädeln in die Darmbremse zu bringen.

Die Erfindung wird nachfolgend unter Bezugnahme auf die folgenden Figuren näher erläutert.
- Fig. 1: zeigt grob schematisch eine perspektivische Ansicht einer Tüllenanordnung einer Füllmaschine gemäß der vorliegenden Erfindung
- Fig. 2: zeigt grob schematisch ein Ausführungsbeispiel einer Vorrichtung zum radialen Ausrichten einer verbogenen Tülle gemäß einem ersten Ausführungsbeispiel
- Fig. 3: zeigt eine Vorrichtung zum radialen Ausrichten einer Tülle gemäß einem weiteren Ausführungsbeispiel
- Fig. 4: zeigt eine Vorrichtung zum Ausrichten einer Tülle gemäß einem weiteren Ausführungsbeispiel
- Fig. 5a,5b: zeigen in perspektivischer Darstellung ein weiteres Ausführungsbeispiel einer Vorrichtung zum radialen Ausrichten einer Tülle mittels Hebels
- Fig.6a, 6b: zeigen ein weiteres Ausführungsbeispiel gemäß der vorliegenden Erfindung mit einer Walzricht-Einrichtung
- Fig. 7: zeigt schematisch eine Anordnung mit einem Sensor zum Messen der Rundlaufabweichung, sowie ein gerades als auch ein verbogenes Rohr.
- Fig. 8 a,b,c: zeigen schematisch Seitenansichten weiterer Ausführungsbeispiele gemäß der Erfindung.
- Fig. 9: zeigt eine weitere Ausführungsform gemäß der vorliegenden Erfindung.

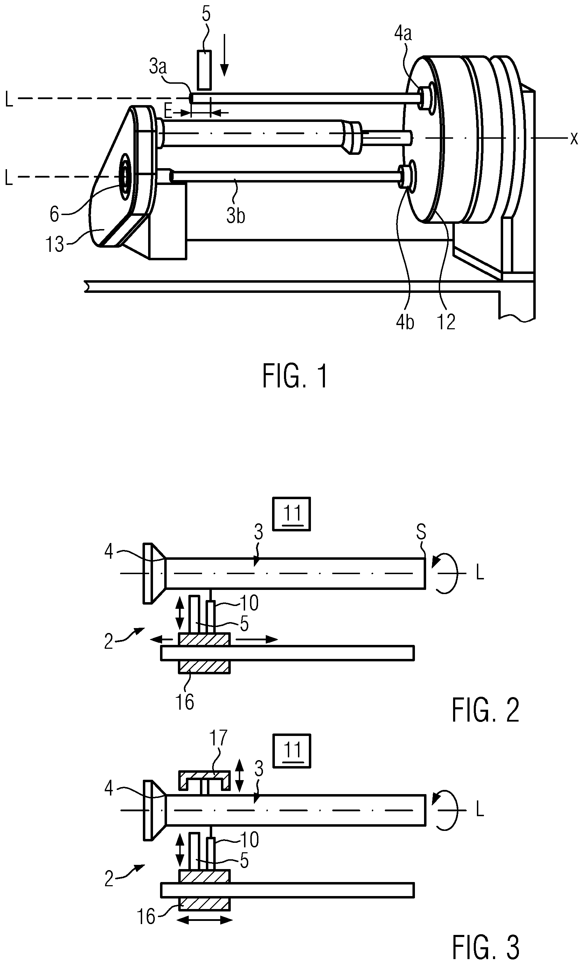

Fig. 1 zeigt ein mögliches Ausführungsbeispiel gemäß der vorliegenden Erfindung mit zwei Füllrohren 3a, 3b in Form von Tüllen, die an einem um eine Achse X drehbaren Revolver 12 angeordnet sind und durch Drehen des Revolvers von einer Position zum Aufbringen der Wursthüllen in eine Füllposition verschwenkt werden können, in der dann die Tülle 3b in eine Darmbremse 6, die sich beispielsweise in dem Bremsringgehäuse 13 befindet, eingeschoben werden kann. Es ist auch möglich, dass beispielsweise das Bremsringgetriebe 13 von der Tülle weg und zur Tülle hin geschwenkt werden kann. Fig. 1 zeigt lediglich ein mögliches Beispiel.

Die in der Füllposition befindliche Tülle 3b ist über eine Pumpe, z.B. Flügelzellenpumpe (nicht dargestellt), z.B. mit einem Trichter verbunden derart, dass z.B. pastöse Masse über die Tülle 3 in eine Wursthülle ausgestoßen werden kann, wobei die Darmbremse 6 die Wursthülle auf die Tülle drückt.

Wie bereits vorab beschrieben, kann es leicht zum Verbiegen der Tüllen 3 kommen, die z.B. 400 bis 600 mm lang sind, einen Durchmesser in einem Bereich von 8 mm bis 28 mm und eine Wandstärke von 0,35 mm bis 1 mm aufweisen. Wie bereits beschrieben, kommt es durch diese Auslenkung zu erheblichen Problemen, insbesondere, wenn die Tülle 3b in die Darmbremse 6 eingeschoben werden soll (siehe Fig. 1).

Die Tülle kann wie beschrieben angetrieben werden, also eine Abdrehtülle sein oder bei den Ausführungsformen, bei denen keine Drehbewegung notwendig ist, ein feststehendes Füllrohr.

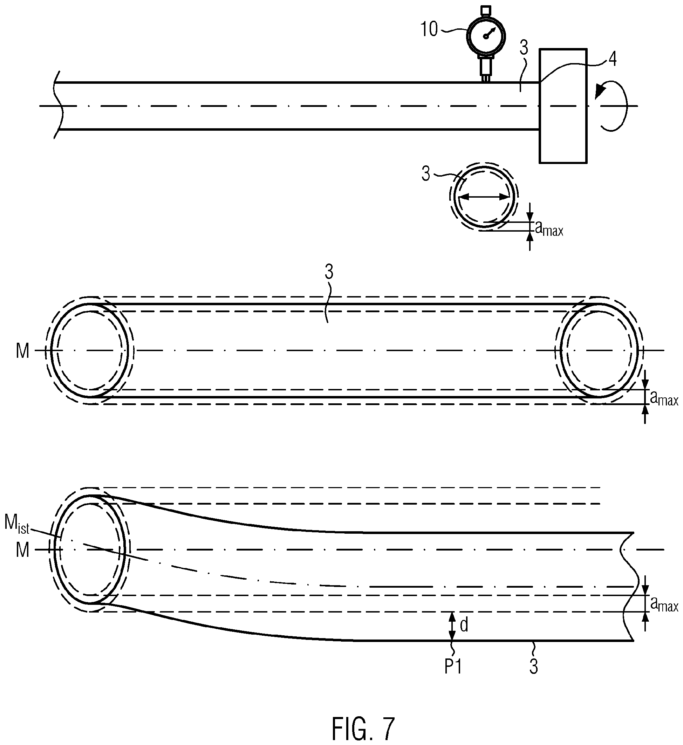

Fig. 7, obere und mittlere Abbildung, zeigt beispielsweise eine ausgerichtete Tülle und die untere Abbildung eine verbogene Tülle 3. Die Tülle 3 ist, wie aus Fig. 1 hervorgeht, in einer Lagereinrichtung 4 drehbar um eine Längsachse L gelagert. Ist die Tülle 3 verbogen, fällt die tatsächliche Mittelachse Mᵢₛₜ der Tülle nicht mehr mit der Längsachse L zusammen. Es kommt somit zu einer Unwucht der sich drehenden Tülle. Damit eine einwandfreie Funktion der Füllmaschine gewährleistet wird darf eine bestimmte Rundlaufabweichung aₘₐₓ nicht überschritten werden. Die maximal zulässige Rundlaufabweichung aₘₐₓ beträgt beispielsweise 0,3 mm - 0,5 mm d.h. eine Abweichung von ± ½ a von einer Sollposition der zylindrischen Außenfläche der Tülle. Wie aus Fig. 7 hervorgeht, liegt am Punkt P1 die Position der Tüllenaußenwand außerhalb der akzeptablen Toleranz, ist beispielsweise um die Abweichung d nach unten verbogen. Eine Abweichung kann beispielsweise über einen in Fig 7 gezeigten Abstandssensor 10, der nachfolgend noch näher erläutert wird, oder auch vom Bediener erkannt werden.

Gemäß der vorliegenden Erfindung weist die erfindungsgemäße Füllmaschine eine Vorrichtung 2 zum radialen Ausrichten einer verbogenen Tülle 3 auf, derart, dass das Rohr wieder entgegen der Krümmung geradegebogen werden kann. Dazu ist ein bewegliches Biegeelement 5 vorgesehen, das die Tülle 3 zumindest abschnittsweise verbiegen kann, derart, dass die Tüllenaußenwand innerhalb der Rundlaufabweichung aₘₐₓ liegt, zumindest im Endbereich E (siehe Fig. 1) der Tülle, wobei der Endbereich E beispielsweise den letzten 3 cm oder 4 cm des Füllrohrs entspricht.

Fig. 2 zeigt ein erstes Ausführungsbeispiel gemäß der vorliegenden Erfindung. Fig. 2 zeigt die Tülle 3, die drehbar in der Lagereinrichtung 4 gelagert ist. Weiter ist gemäß diesem Ausführungsbeispiel ein Biegeelement 5 vorgesehen, das, wie durch den Pfeil dargestellt ist, senkrecht zur Längsachse L vor und zurück bewegbar ist. Auch wenn hier nicht dargestellt, muss sich das Biegeelement nicht zwangsläufig senkrecht zur Längsachse L bewegen, sondern kann auch unter einem Winkel von 80° - 100°, vorzugsweise 85° bis 95° gerade zur Längsachse L auf das Rohr drücken. Das Biegeelement 5 ist vorzugsweise ein Biegestößel, der über einen Antrieb verfahren kann, beispielsweise elektrisch, hydraulisch, pneumatisch, mechanisch. Der Biegestößel 5 ist beispielsweise als Pneumatikzylinder ausgeführt und kann an einem Schlitten 16 in einer Richtung entlang der Längsachse L vor- und zurückbewegt werden. Dazu kann auch ein entsprechender Antrieb vorgesehen sein, beispielsweise ein Servomotor. In diesem Ausführungsbeispiel ist ein optionaler Sensor 10 vorgesehen, der z.B. die Rundlaufabweichung a messen kann, d.h. die Position der Tüllenaußenwand. Der Sensor kann insbesondere ein Abstandsmesser sein. Der Sensor kann auch ein Sensor zum Messen des Tüllendurchmessers sein.

Als Sensoren kommen unterschiedliche Sensoren zum Erfassen der Unrundheit bzw. der Unwucht der Tülle infrage, beispielsweise sind Sensoren ausgebildet zur
- optischen Messung, beispielsweise durch Laser oder Lichtschnittsensor
- induktive oder kapazitive Messung
- Radarsensor, Ultraschallsensor, Hallsensor
- Kamera, Messung des Schattenwurfs,...
- taktilen Messung, durch beispielsweise elektromechanische Taster oder taktile Messuhr ( siehe Fig 7).
- Messung von Körperschall (Vibrationen an der Maschine) oder Luftschallmessung über die Stromaufnahme des Antriebs der Tülle etc., Über diese Messung kann zumindest das Vorhandensein einer Unwucht erfasst werden.

Bei dem in Fig. 2 gezeigten Ausführungsbeispiel dreht sich die Tülle 3 beim Ausrichten um die Längsachse L, wobei der Biegestößel 5 an der Tülle 3 von der Lagereinrichtung 4 d.h. der Einklemmstelle aus bis zur Spitze S verfährt und die Tülle 3 immer weiter auslenken kann. Die Tülle dreht sich währenddessen und wird so radial ausgerichtet. An der Spitze S fährt der Biegestößel 5 langsam zu einer Mittelposition zwischen Spitze S und Lagereinrichtung 4 zurück. In Abhängigkeit des Durchmessers und des Sensorsignals, d.h. der gemessenen Position der Tüllenaußenwand, kann dabei eine Steuerung 11 die Bewegung des Biegeelements in einer Richtung senkrecht zur Längsachse L bestimmen ( und z.B. das Biegeelement in eine Position bringen, die der Sollposition der Tüllenaußenwand entspricht und den Antrieb des Biegeelements 5 entsprechend ansteuern, insbesondere Weg-gesteuert, so dass an einer bestimmten Position, wie auch aus Fig. 7 hervorgeht, das Rohr wieder radial ausgerichtet werden kann. Durch die Drehung kann die Tülle auf einfache Art und Weise ausgerichtet werden. Auch die Bewegung des Biegeelements 5 in Richtung der Längsachse L wird durch die Steuerung bestimmt und der Antrieb des Biegeelements, beispielsweise ein Schrittmotor, entsprechend angesteuert, d.h., die Bewegung zur Tülle 3 hin und entlang der Längsachse L koordiniert werden. Hierzu kann auch der Tüllendurchmesser gemessen werden oder eingegeben werden. Entsprechendes war nur ein Beispiel dafür, wie eine Maschinensteuerung die notwendige Bewegung des Biegestößels, hier in Richtung L sowie senkrecht zur Axialrichtung L, bestimmt.

Fig. 3 zeigt ein weiteres Ausführungsbeispiel gemäß der vorliegenden Erfindung. Der Biegestößel 5 drückt hier nicht auf die drehende Tülle 3, sondern auf ein stillstehendes Füllrohr 3 bzw. Tülle, das von einem Gegenhalter 17, der dem Schlitten mit dem Biegestößel 5 gegenüberliegt gestützt wird. Damit wird gewährleistet, dass eine gezielte Biegung an beliebigen Punkten der Tülle erfolgen kann. Der Gegenhalter kann entweder beidseitig ausgeführt werden oder nur einseitig zwischen Biegeelement und Lagereinrichtung, damit der Punkt auf der Längsachse bestimmt werden kann, um welchen gebogen werden soll. Somit ist es nicht zwingend die Lagereinrichtung 4, um welche gebogen werden muss.

Wie bei dem vorherigen Ausführungsbeispiel ist auch hier ein Sensor 10 auf dem Schlitten16 vorgesehen, um die Rundlaufabweichung zu bestimmen, insbesondere die Position der Tüllenaußenwand an mehreren Stellen entlang der Längsachse L oder kontinuierlich über die gesamte Länge. In Abhängigkeit der Sensorsignale kann dann die Bewegung des Biegestößels 5 entsprechend von der Steuerung bestimmt werden und der Stößel entsprechend Kraft- oder Weg-gesteuert angesteuert werden. Zusätzlich kann über den Servomotor des Tüllenantriebs über Vorgabe des Drehwinkels die Tülle entgegengesetzt zur gemessenen Abweichung positioniert werden, damit durch den Biegestößel in die der Verbiegung entgegengesetzten Richtung gebogen werden kann. Dies ermöglicht, dass die Tülle mit der minimalen Anzahl an Biegevorgängen ausgerichtet werden kann, sofern dies nicht kontinuierlich geschieht. Die Ausrichtung erfolgt auch hier von der Einspannstelle an der Lagereinrichtung 4 bis zur Spitze S der Tülle hin kontinuierlich oder an mehreren Stellen. Die Tüllen können je nach Anzahl der gemessenen und von der Sollposition abweichenden Punkte beliebig genau ausgerichtet werden. Je größer die Anzahl der eingestellten Stellen und je enger die Toleranz d.h. insbesondere die maximale Rundlaufabweichung a gewählt wird, desto exakter ist das Verfahren.

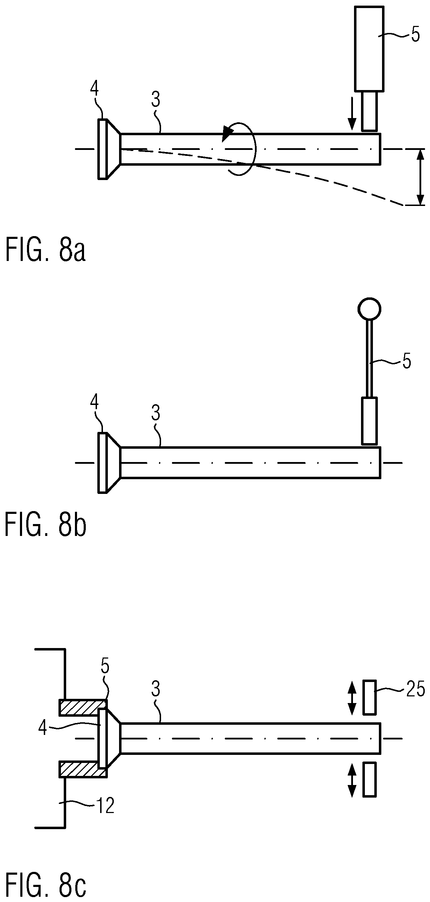

Wie bereits zuvor erläutert, ist es auch möglich, wenn zumindest das Vorhandensein einer Unwucht festgestellt wird, dass anstelle der ganzen Tülle nur der Endbereich, d.h. beispielsweise die letzten 3 cm bis 4 cm der Tülle, wie in Fig. 8a, 8b gezeigt ist, durch einen Biegestößel 5 ausgelenkt werden. Der Biegestößel drückt dabei derart zumindest im Endbereich E , d.h. der letzten 3 oder 4 cm auf die Tülle 3, dass zumindest im Endbereich die Mittelachse der Tülle im Wesentlichen mit der Längsachse L zusammenfällt. Die Tülle dreht sich während des Ausrichtens.

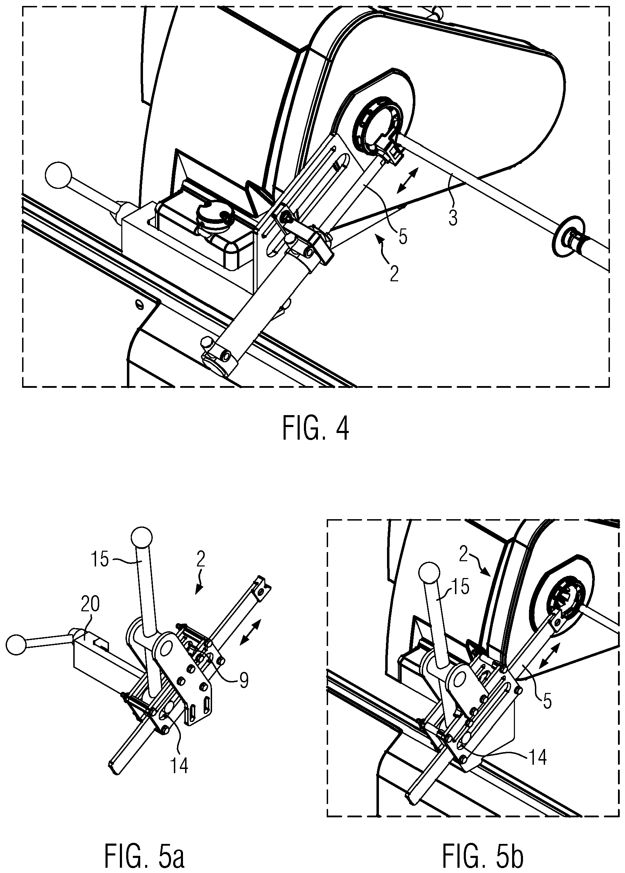

Bei diesem Ausführungsbeispiel erfolgt das Ausrichten vorzugsweise unabhängig von einer gemessenen Rundlaufabweichung des Rohres. Durch optionales, langsames Zurückfahren des Biegestößels 5 von der Spitze S in einen mittleren Bereich der Tülle 3 (während sich die Tülle dreht) läuft die Tülle 3 nach der Auslenkung im Wesentlichen rund. Dabei kann der Durchmesser vom Bediener eingestellt werden und die Vorrichtung biegt die Tülle dann entsprechend. Der Stößel kann dabei elektrisch, hydraulisch, pneumatisch oder mechanisch ausgeführt sein und ist wie in der Fig. 4 dargestellt, beispielsweise als Pneumatikzylinder ausgebildet. Der Pneumatikzylinder ist hier in einem Endbereich der Tülle angeordnet und ist, wie bei vorherigen Ausführungsbeispielen beschrieben, parallel zur Längsachse L vor- und zurückbewegbar.

Fig. 5a und 5b zeigen ein weiteres Ausführungsbeispiel gemäß der vorliegenden Erfindung. Der Biegestößel 5 kann hier durch die Verwendung von Handkraft über einen Hebel bewegt werden. Eine entsprechende Ausführungsform ist sehr einfach, dafür aber nicht mehr automatisiert ausgeführt. Durch den Hebel ist das Konzept sicher für den Bediener, da keine drehenden Teile von Hand berührt werden. Die Vorrichtung 2 weist z.B. eine Führung 14 für den Stößel auf, sowie einen entsprechend Handhebel 15. Darüber hinaus weist die Vorrichtung eine Befestigungseinrichtung 20, hier ein Klemmelement, auf, über die die Vorrichtung 2 zumindest temporär an der Füllmaschine befestigt werden kann. Der Biegestößel 5 weist hier einen Anschlag 9 auf. Dieser kann in Abhängigkeit der montierten Tülle 3 beispielsweise auf eine markierte Position eingestellt werden. So können die Tüllen reproduzierbar auf gleichbleibende Genauigkeit eingestellt werden. Für verschiedene Tüllen werden verschiedene Anschlagpositionen oder Anschläge 9 benötigt, wobei Tüllen mit den gleichen Einstellungen gut gerichtet werden können. Über das Ziehen des Hebels 15 wird der Biegestößel 5 senkrecht zur Längsachse L bewegt, um die Tülle auszulenken. Der Hebel 15 wird dann langsam in die Ausgangsposition zurückgefahren.

Der Handhebel kann entweder, in Richtung der Längsachse L betrachtet, an einer festen Position im Endbereich der Tülle angeordnet sein und nur an dieser Stelle auf das Füllrohr drücken, dass zumindest der Endbereich der Tülle radial ausgerichtet wird oder aber auch beispielsweise manuell entlang einer Achse parallel zur Längsachse L hin und her bewegbar sein. Hierzu kann auch ein ebenfalls parallel zur Längsachse beweglicher Gegenhalter (nicht dargestellt) vorgesehen sein.

Bei dieser vereinfachten Version ist durch die voreingestellten Anschläge kein Sensor zwingend notwendig. Das Verfahren gemäß diesem Ausführungsbeispiel erfolgt vorteilhafterweise bei sich drehender Tülle, damit die Verformung gleichmäßig erfolgt.

Bei einem weiteren Ausführungsbeispiel übernimmt der Revolver 12 die Funktion des beweglichen Biegeelements wie in Fig. 8 c dargestellt ist. Die Funktion des Biegestößels 5 wird durch die Revolverbewegung (die Drehung die Achse x um die verschiedenen Tüllen beispielsweise in die Füllposition zu bringen wie in Fig.1 dargestellt ist) übernommen. Die Tülle 3 wird für den Richtvorgang an der Spitze S oder im vorderen Bereich durch eine Einspanneinrichtung 25 zentriert festgehalten. Der Richtvorgang erfolgt bei stehender Tülle. Das erzwingt die Verwendung eines Sensors, um das Maß und Richtung der Abweichung zu ermitteln. Die Tülle muss für den Ausrichtvorgang winkelgenau positioniert werden. Hier wird die Einspannstelle der Tülle ausgelenkt und nicht die Spitze wie bei den vorhergehenden Ausführungsbeispielen.

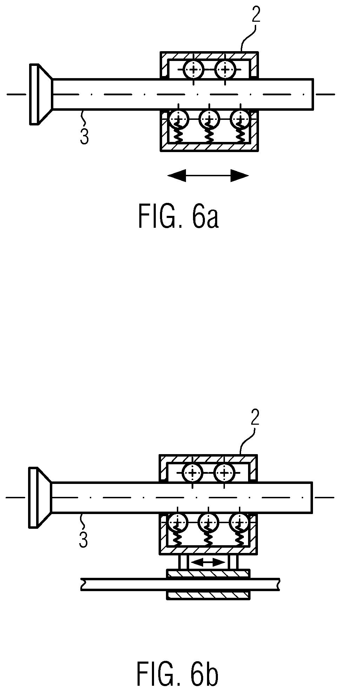

Fig. 6a und 6b zeigen ein weiteres Ausführungsbeispiel gemäß der vorliegenden Erfindung. Die Vorrichtung zum radialen Ausrichten der verbogenen Tülle 3 kann auch eine Walzricht-Einrichtung 2 aufweisen mit mehreren in Längsrichtung der Tülle betrachtet hintereinander und um den Tüllenumfang herum angeordneten Biegeelementen 5 in Form von vorgespannten Rollen, die die Tülle 3 wechselseitig biegen und begradigen können, wobei vorzugsweise die Walzricht-Einrichtung parallel zur Längsrichtung L hin und her bewegbar ist. Die Walzricht-Einrichtung kann dann z.B. von Hand oder automatisch an der Tülle entlang mittels eines Antriebes verfahren werden. Damit ist die korrekte Ausrichtung der Achse sichergestellt.

Bei den Ausführungsbeispielen mit stehender Tülle ist eine Einrichtung zum Gegenhalten vorteilhaft.

Gemäß einem Ausführungsbeispiel weist der Biegestößel vorzugsweise an seinem der Tülle zugewandten Endbereich eine Aussparung auf, insbesondere eine im Wesentlichen V-förmige, U-förmige oder C-förmige Aussparung derart, dass beim Verbiegen die Tülle in der Aussparung liegt. Durch die besondere Ausgestaltung des Endbereichs ist es möglich, dass beim Biegevorgang die Tülle sicher im Bereich der Aussparung anliegen kann und beispielsweise nicht ausweicht.

Bei dem erfindungsgemäßen Verfahren wird eine verbogene Tülle in einer Lagereinrichtung 4 zum drehbaren Lagern der Tülle um eine Längsachse L eingespannt und ein Biegeelement 5 bewegt sich derart, dass die Abdrehttülle zum radialen Ausrichten zumindest abschnittsweise verbogen wird. Die gezeigten Ausführungsbeispiele, wie die Bewegung des Biegeelements erfolgt bzw. die optionale Verwendung eines Sensors, sind nur beispielhaft. Wesentlich ist, dass die Vorrichtung zum radialen Ausrichten der verbogenen Tülle in der Füllmaschine integriert ist, um so zumindest den vorderen oder hinteren Endbereich der Tülle so dauerhaft zu verbiegen und dadurch zu richten, dass die Tülle sowohl beim Auffädeln von Wursthüllen, insbesondere Darmraupen, exakt zentrisch angeordnet werden kann und auch beim Einfädeln in die Darmbremse keinerlei Probleme macht.

Bei dem erfindungsgemäßen Verfahren ist es vorteilhaft, dass das Biegeelement, d.h. der Biegestößel, z.B. schnell einfahren kann (z.B. 30 - 50 mm/s) und langsamer aus dem Eingriff aus der drehenden Tülle ausfahren kann (z.B. 5 - 20 mm/s). Die Kraft kann bis zu einer Zielkraft von z.B. 10 N bis 300 N, insbesondere 150 N, kontrolliert werden. Auch der Weg kann über einen Endanschlag oder eine Positionsangabe für einen Stellantrieb (z.B. mit Positionen je Variante einer Tülle bzw. des Tüllendurchmessers) begrenzt werden.

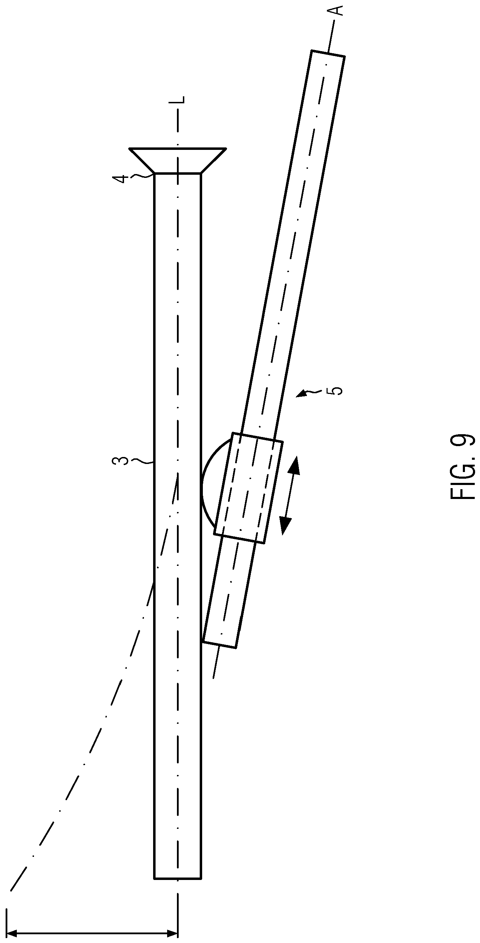

Fig. 9 zeigt ein weiteres Ausführungsbeispiel gemäß der vorliegenden Erfindung. Das Biegeelement 5 ist hier nicht parallel zur Längsachse L hin und her bewegbar sondern entlang einer Achse A einer entsprechenden Führung, die schräg zur Längsachse L verläuft. Fig.9 zeigt gestrichelt auch die mögliche Auslenkung durch die schräge Linearbewegung des Biegeelements 5. Es ist möglich, wie zuvor in Zusammenhang mit den vorhergehenden Ausführungsbeispielen beschrieben wurde, dass ein Sensor ebenfalls auf der schrägen Achse hin und her bewegbar angeordnet ist und dem Biegeelement 5 voraus eilt.

## Patentansprüche

1. Füllmaschine (1) zum Abfüllen von Lebensmitteln, insbesondere zur Wurstherstellung mit
einer Tülle (3) zum Ausstoßen des Lebensmittels, und mit
einer Lagereinrichtung (4) zum Lagern, insbesondere drehbaren Lagern, der Tülle (3) um
eine Längsachse (L)
**gekennzeichnet durch**
eine Vorrichtung (2) zum radialen Ausrichten einer verbogenen Tülle (3), die ein Biegeelement (5) aufweist, welches derart ausgebildet ist, dass es die Tülle (3) zumindest abschnittsweise verbiegen und ausrichten kann.

2. Füllmaschine (1) nach Anspruch 1, **dadurch gekennzeichnet, dass** das Biegeelement (5) unter einem Winkel, insbesondere senkrecht zur Längsachse (L) beweglich ist um die Tülle (3) zumindest abschnittsweise zu verbiegen und insbesondere
als Biegestößel ausgebildet ist, der vorzugsweise an seinem der Tülle zugewandten Endbereich eine Aussparung (7), insbesondere eine im wesentlichen V-förmige, U-förmige oder C-förmige Aussparung aufweist, derart, dass beim Verbiegen die Tülle(3) in der Aussparung (7) liegt.

3. Füllmaschine nach Anspruch 1 oder 2, **dadurch gekennzeichnet, dass**
die Tülle (3) derart verbogen werden kann, dass zumindest in dem, der Lagereinrichtung (4) abgewandten Endbereich der Tülle (3), die Mittelachse (M) der Tülle (3) sich im Wesentlichen entlang der Längsachse (L) erstreckt.

4. Füllmaschine nach Anspruch 1 ,2 oder 3, **dadurch gekennzeichnet, dass** das Biegeelement (5) entlang einer zur Längsachse (L) parallelen oder schrägen Achse hin und her beweglich angeordnet ist.

5. Füllmaschine (1) nach mindestens einem der Ansprüche 1-4, **dadurch gekennzeichnet, dass**
die Vorrichtung (2) zum radialen Ausrichten der verbogenen Tülle (3) einen Sensor (10) aufweist, der insbesondere eine Rundlaufabweichung (a) messen kann, vorzugsweise in Form eines Sensors
zum Messen der Position der Tüllenaußenwand, insbesondere in Form eines Abstandsmessers und/oder der zum Messen des Tüllendurchmessers ausgebildet ist.

6. Füllmaschine (1) insbesondere nach Anspruch 5, **dadurch gekennzeichnet, dass** der Sensor (10) insbesondere zusammen mit dem Biegeelement (5) entlang einer zur Längsachse (L) parallelen Achse oder schrägen Achse hin und her beweglich angeordnet ist.

7. Füllmaschine (1) nach Anspruch 5 oder 6, **dadurch gekennzeichnet, dass** die Tülle (3) über einen Servoantrieb mit Lageerkennung der Winkelstellung gedreht werden kann.

8. Füllmaschine (1) nach mindestens einem der Ansprüche 5-7, **dadurch gekennzeichnet, dass** eine Steuerung (11) in Abhängigkeit eines Sensorsignals die Bewegung des Biegeelements (5) zur Längsachse (L) bestimmt und einen Antrieb des Biegeelements entsprechend ansteuert, insbesondere Weg-gesteuert und/ oder Kraft-gesteuert und insbesondere die Bewegung des Biegeelements (5) in Richtung der Längsachse (L) bestimmt und einen weiteren Antrieb des Biegeelements (5) entsprechend ansteuert.

9. Füllmaschine nach einem der Ansprüche 1-8, **dadurch gekennzeichnet, dass** die Vorrichtung (2) zum radialen Ausrichten einer verbogenen Tülle (8) einen Hebel (15) aufweist, der insbesondere über Handkraft das Biegeelement (5), insbesondere den Biegestößel bewegt, wobei vorzugsweise ein Anschlag (9) für den Hebel (15) vorgesehen ist und noch bevorzugter verschiedene Anschlagpositionen einstellbar sind.

10. Füllmaschine nach mindestens einem der Ansprüche 1-9, **dadurch gekennzeichnet, dass** die Vorrichtung (2) zum radialen Ausrichten zumindest temporär an der Füllmaschine befestigbar ist.

11. Füllmaschine nach mindestens einem der Ansprüche 1-10, **dadurch gekennzeichnet, dass** die Vorrichtung (2) zum radialen Ausrichten einer verbogenen Tülle (8) eine Walzricht-Einrichtung aufweist, mit mehreren in Längsrichtung der Tülle (3) betrachtet hintereinander und um den Tüllenumfang herum angeordneten Biegeelementen (5) in Form von vorgespannten Rollen, die die Tülle wechselseitig biegen und begradigen können, wobei vorzugsweise die Walzricht-Einrichtung parallel zur Längsrichtung (L) hin und her bewegbar ist.

12. Verfahren zum radialen Ausrichten einer Tülle (3) insbesondere mit einer Füllmaschine nach mindestens einem der Ansprüche 1-11, **dadurch gekennzeichnet, dass** eine verbogene Tülle (3) in einer Lagereinrichtung (4) zum Lagern, insbesondere zum drehbaren Lagern der Tülle (3) um eine Längsachse (L), eingespannt ist und
ein Biegeelement (5) die verbogene Tülle zum radialen Ausrichten zumindest abschnittsweise verbiegt und sich vorzugsweise unter einem Winkel, insbesondere senkrecht zur Längsachse (L) bewegt.

13. Verfahren nach Anspruch 12, **dadurch gekennzeichnet, dass** ein Sensor (10) insbesondere die Rundlaufabweichung misst, vorzugsweise die Position der Tüllenaußenwand an mehreren Stellen entlang der Tülle.

14. Verfahren nach Anspruch 12 oder 13, **dadurch gekennzeichnet, dass** sich während des Ausrichtens durch das Biegeelement (5) die Tülle dreht, wobei sich vorzugsweise das Biegeelement von der Lagereinrichtung (4) bis zu der der Lagereinrichtung (4) abgewandten Tüllenspitze (S) bewegt und dann vorzugsweise zurück, insbesondere in den mittleren Bereich zurück verfahren wird oder
die Tülle (3) steht, wobei die Tülle (3) vorzugsweise beim Ausrichten von einem Gegenhalter gestützt wird und das Biegeelement an einer oder mehreren Positionen der Tülle Kraft-oder Weg-gesteuert auf die Tülle drückt.

15. Verfahren nach mindestens einem der Ansprüche 12 bis 13, **dadurch gekennzeichnet, dass** nur der der Lagereinrichtung abgewandten Endbereich der Tülle (3) durch das Biegeelement (5) ausgelenkt und gerichtet wird.

16. Verfahren nach mindestens einem der Ansprüche 12-15, **dadurch gekennzeichnet, dass** die verbogene Tülle radial ausgerichtet wird, bevor eine Wursthülle aufgezogen wird.

17. Vorrichtung nach mindestens einem der Ansprüche 1-11, **dadurch gekennzeichnet, dass** das Biegeelement (5) eine Drehbewegung durchführt und ein Revolver (12) ist, in dem die Lagereinrichtung (4) angeordnet ist und der selbst um eine Achse parallel zur Längsachse L gedreht werden kann und durch diese Drehbewegung die in einer Einspanneinrichtung (25) zentrisch eingespannte Tülle (3) bewegen kann.

## Geänderte Patentansprüche

### Geänderte Patentansprüche gemäss Regel 137(2) EPÜ.

1. Füllmaschine (1) zum Abfüllen von Lebensmitteln, insbesondere zur Wurstherstellung mit
einer Tülle (3) zum Ausstoßen des Lebensmittels, und mit
einer Lagereinrichtung (4) zum Lagern, insbesondere drehbaren Lagern, der Tülle (3) um eine Längsachse (L)
**gekennzeichnet durch**
eine Vorrichtung (2) zum radialen Ausrichten einer verbogenen Tülle (3), die ein Biegeelement (5) aufweist, welches derart ausgebildet ist, dass es die Tülle (3) zumindest abschnittsweise verbiegen und ausrichten kann wobei das Biegeelement (5) unter einem Winkel, insbesondere senkrecht zur Längsachse (L) beweglich ist um die Tülle (3) zumindest abschnittsweise zu verbiegen.

2. Füllmaschine (1) nach Anspruch 1, **dadurch gekennzeichnet, dass** das Biegeelement als Biegestößel ausgebildet ist, der vorzugsweise an seinem der Tülle zugewandten Endbereich eine Aussparung (7), insbesondere eine im wesentlichen V-förmige, U-förmige oder C-förmige Aussparung aufweist, derart, dass beim Verbiegen die Tülle(3) in der Aussparung (7) liegt.

3. Füllmaschine nach Anspruch 1 oder 2, **dadurch gekennzeichnet, dass** die Füllmaschine derart ausgebildet ist, dass
die Tülle (3) derart verbogen werden kann, dass zumindest in dem, der Lagereinrichtung (4) abgewandten Endbereich der Tülle (3), die Mittelachse (M) der Tülle (3) sich im Wesentlichen entlang der Längsachse (L) erstreckt.

4. Füllmaschine nach Anspruch 1 ,2 oder 3, **dadurch gekennzeichnet, dass** das Biegeelement (5) entlang einer zur Längsachse (L) parallelen oder schrägen Achse hin und her beweglich angeordnet ist.

5. Füllmaschine (1) nach mindestens einem der Ansprüche 1-4, **dadurch gekennzeichnet, dass**
die Vorrichtung (2) zum radialen Ausrichten der verbogenen Tülle (3) einen Sensor (10) aufweist, der eine Rundlaufabweichung (a) messen kann, vorzugsweise in Form eines Sensors
zum Messen der Position der Tüllenaußenwand, insbesondere in Form eines Abstandsmessers und/oder der zum Messen des Tüllendurchmessers ausgebildet ist.

6. Füllmaschine (1) insbesondere nach Anspruch 5, **dadurch gekennzeichnet, dass** der Sensor (10) entlang einer zur Längsachse (L) parallelen Achse oder schrägen Achse hin und her beweglich angeordnet ist oder
der Sensor (10) zusammen mit dem Biegeelement (5) entlang einer zur Längsachse (L) parallelen Achse oder schrägen Achse hin und her beweglich angeordnet ist.

7. Füllmaschine (1) nach Anspruch 5 oder 6, **dadurch gekennzeichnet, dass** die Tülle (3) über einen Servoantrieb mit Lageerkennung der Winkelstellung gedreht werden kann.

8. Füllmaschine (1) nach mindestens einem der Ansprüche 5-7, **dadurch gekennzeichnet, dass** eine Steuerung (11) in Abhängigkeit eines Sensorsignals die Bewegung des Biegeelements (5) zur Längsachse (L) bestimmt und einen Antrieb des Biegeelements entsprechend ansteuert, insbesondere Weg-gesteuert und/ oder Kraftgesteuert und insbesondere
die Bewegung des Biegeelements (5) in Richtung der Längsachse (L) bestimmt und einen weiteren Antrieb des Biegeelements (5) entsprechend ansteuert.

9. Füllmaschine nach einem der Ansprüche 1-8, **dadurch gekennzeichnet, dass** die Vorrichtung (2) zum radialen Ausrichten einer verbogenen Tülle (8) einen Hebel (15) aufweist, der insbesondere über Handkraft das Biegeelement (5), insbesondere den Biegestößel bewegt, wobei vorzugsweise ein Anschlag (9) für den Hebel (15) vorgesehen ist und noch bevorzugter verschiedene Anschlagpositionen einstellbar sind.

10. Füllmaschine nach mindestens einem der Ansprüche 1-9, **dadurch gekennzeichnet, dass** die Vorrichtung (2) zum radialen Ausrichten zumindest temporär an der Füllmaschine befestigbar ist.

11. Füllmaschine nach mindestens einem der Ansprüche 1-10, **dadurch gekennzeichnet, dass** die Vorrichtung (2) zum radialen Ausrichten einer verbogenen Tülle (8) eine Walzricht-Einrichtung aufweist, mit mehreren in Längsrichtung der Tülle (3) betrachtet hintereinander und um den Tüllenumfang herum angeordneten Biegeelementen (5) in Form von vorgespannten Rollen, die die Tülle wechselseitig biegen und begradigen können, wobei vorzugsweise die Walzricht-Einrichtung parallel zur Längsrichtung (L) hin und her bewegbar ist.

12. Verfahren zum radialen Ausrichten einer Tülle (3) insbesondere mit einer Füllmaschine nach mindestens einem der Ansprüche 1-11, **dadurch gekennzeichnet, dass** eine verbogene Tülle (3) in einer Lagereinrichtung (4) zum Lagern, insbesondere zum drehbaren Lagern der Tülle (3) um eine Längsachse (L), eingespannt ist und
ein Biegeelement (5) die verbogene Tülle zum radialen Ausrichten zumindest abschnittsweise verbiegt und sich unter einem Winkel, insbesondere senkrecht zur Längsachse (L) bewegt.

13. Verfahren nach Anspruch 12, **dadurch gekennzeichnet, dass** ein Sensor (10) die Rundlaufabweichung misst, vorzugsweise die Position der Tüllenaußenwand an mehreren Stellen entlang der Tülle.

14. Verfahren nach Anspruch 12 oder 13, **dadurch gekennzeichnet, dass** sich während des Ausrichtens durch das Biegeelement (5) die Tülle dreht, wobei sich vorzugsweise das Biegeelement von der Lagereinrichtung (4) bis zu der der Lagereinrichtung (4) abgewandten Tüllenspitze (S) bewegt und dann vorzugsweise zurück, insbesondere in den mittleren Bereich zurück verfahren wird oder
die Tülle (3) steht, wobei die Tülle (3) vorzugsweise beim Ausrichten von einem Gegenhalter gestützt wird und das Biegeelement an einer oder mehreren Positionen der Tülle Kraft- oder Weg-gesteuert auf die Tülle drückt.

15. Verfahren nach mindestens einem der Ansprüche 12 bis 13, **dadurch gekennzeichnet, dass** nur der der Lagereinrichtung abgewandten Endbereich der Tülle (3) durch das Biegeelement (5) ausgelenkt und gerichtet wird.

16. Verfahren nach mindestens einem der Ansprüche 12-15, **dadurch gekennzeichnet, dass** die verbogene Tülle radial ausgerichtet wird, bevor eine Wursthülle aufgezogen wird.

17. Vorrichtung nach mindestens einem der Ansprüche 1-11, **dadurch gekennzeichnet, dass** das Biegeelement (5) eine Drehbewegung durchführt und ein Revolver (12) ist, in dem die Lagereinrichtung (4) angeordnet ist und der selbst um eine Achse parallel zur Längsachse L gedreht werden kann und durch diese Drehbewegung die in einer Einspanneinrichtung (25) zentrisch eingespannte Tülle (3) bewegen kann.
